# EUROPÄISCHE PATENTSCHRIFT

(11) **EP 3 752 027 B1**
(45) Veröffentlichungstag und Bekanntmachung des Hinweises auf die Patenterteilung: **11.05.2022**
(21) Anmeldenummer: 19707693.8
(22) Anmeldetag: 12.02.2019
(51) Int. Cl.: A47C 3/30, A47C 7/00, A47C 9/02, F16C 1/10

(54) **SITZ- UND STÜTZMÖBEL**
PIECE OF SEATING AND SUPPORTING FURNITURE
MEUBLE D'ASSISE ET DE SUPPORT

(30) Priorität: 14.02.2018 DE 202018100807 U
(43) Veröffentlichungstag der Anmeldung: 23.12.2020
(73) Patentinhaber: Kinema GmbH, 36100 Petersberg (DE)
(72) Erfinder: ZOELL, Stefan, 36151 Burghaun (DE)
(74) Vertreter: IPrime Bonnekamp Sparing Patentanwaltsgesellschaft mbH
(86) Internationale Anmeldenummer: PCT/DE2019/100140
(87) Internationale Veröffentlichungsnummer: WO 2019/158159

(56) Entgegenhaltungen:
- EP-A1- 3 311 703
- WO-A1-2019/038419
- CN-A- 106 087 498
- DE-A1- 3 836 398
- DE-A1- 3 933 815
- KR-B1- 100 640 779
- NL-C- 1 037 497

## Beschreibung

Die Erfindung betrifft ein Sitz- und Stützmöbel mit einem Sitz- und Stützkorpus nach dem Oberbegriff des Anspruch 1. Weiter betrifft die Erfindung einen Stoppmechanismus zur Verwendung in einem Sitzmöbel nach dem Oberbegriff der Ansprüche 14 und 15.

Aus der Praxis sind Sitzmöbel, insbesondere Bürostühle, bekannt, welche eine höhenverstellbare Säule aufweisen, wobei die höhenverstellbare Säule mit einem Rollensystem verbunden ist, sodass der Bürostuhl auf ausreichend glatten Oberflächen verfahren werden kann. Weiter sind Bürostühle bekannt, welche zusätzlich einen Stoppmechanismus aufweisen, welcher die Verfahrbarkeit des Bürostuhls in bestimmten Situationen verhindern soll, insbesondere wenn die Sitzfläche des Bürostuhls eine gewisse Höhe auf der höhenverstellbaren Säule überschreitet. Hierdurch sollen Gefahrensituationen, welche bei einer Verwendung des Bürostuhls als Stützmöbel oder als Steighilfe durch ein unerwünschtes Verfahren entstehen können, verhindert werden.

DE 20 2015 007 195 U1 zeigt ein Sitz- und Stützmöbel mit einer höhenverstellbaren Säule, einem Sitz- und Stützkorpus, der an einem ersten Ende der höhenverstellbaren Säule um zumindest eine horizontale Achse zwischen einer ersten Endposition und einer zweiten Endposition schwenkbar angeordnet ist, wobei an der höhenverstellbaren Säule ein erstes Ende einer Feder und an dem Sitz- und Stützkorpus ein zweites Ende der Feder angeschlossen ist und die Feder eine Verschwenkung des Sitz- und Stützkorpus um die horizontale Achse unterstützt. Weiter umfasst das Sitz- und Stützmöbel einen an einem dem ersten Ende gegenüberliegenden zweiten Ende der höhenverstellbaren Säule angeordneten Stoppmechanismus mit einem Reibstück und einem Verriegelungsmechanismus zur lösbaren Verriegelung des Stoppmechanismus. Das Sitz- und Stützmöbel kann dabei in der ersten Endposition des Sitz- und Stützkorpus zum Sitzen und in der zweiten Endposition des Sitz- und Stützkorpus zum Stehsitzen verwendet werden. Nachteilig an dem gezeigten Sitz- und Stützmöbel ist, dass die Aktivierung des Stoppmechanismus bzw. die Entriegelung des an dem zweiten Ende der höhenverstellbaren Säule angeordneten Reibstückes erst ab einer gewissen Höhe des Sitz- und Stützkorpus erfolgt und so eine flexible Anpassung an Benutzer mit geringerer Körpergröße schwierig ist.

DE 197 17 531 C2 zeigt einen Stoppmechanismus für einen höhenverstellbaren Stuhl, der eine Übertragungseinrichtung aufweist, die in Abhängigkeit der Hublänge der Höheneinstelleinrichtung ihre wirksame Übertragungslänge mittels einer Bewegungsumkehreinrichtung entgegen der Ausfahrrichtung der Höheneinstelleinrichtung verändert. Zusätzlich verfügt der Stoppmechanismus an einem Endabschnitt über eine Bremseinrichtung, welche als ein einer Bodenfläche, auf welchem der Stuhl verfahrbar ist, zugewandtes Reibstück ausgebildet ist. Das Reibstück wird in Abhängigkeit der Hublänge der Höheneinstelleinrichtung entriegelt und durch die über das Körpergewicht wirkende vertikale Kraft auf die Bodenfläche gedrückt, wodurch ein höhenverstellbarer Stuhl, der über ein Rollsystem verfügt, am Wegrollen gehindert wird und so der höhenverstellbare Stuhl als Steighilfe benutzt werden kann. Nachteilig an dem gezeigten Stoppmechanismus ist, dass keine flexible Einstellung des Aktivierungspunktes, ab welchem die Bremseinrichtung bzw. das Reibstück ausgefahren bzw. aktiviert wird, möglich ist.

DE 10 2017 208 151 A1 zeigt ein Sitzmöbel mit einer höhenverstellbaren Säule und einem an einem oberen Ende der höhenverstellbaren Säule angeordneten Sitzkorpus und einem an einem unteren Ende der höhenverstellbaren Säule angeordneten Stoppmechanismus. Der Stoppmechanismus umfasst dabei ein Reibstück, welches mit einem Bremsstellelement fest verbunden ist, und eine Stellvorrichtung, welche ein erstes Stellelement und ein zweites Stellelement umfasst. Das Bremsstellelement weist dabei an einem dem Reibstück abgekehrten oberen Ende eine Verzahnung auf, welche komplementär zu einer an einem unteren Ende des zweiten Stellelementes angeordneten Verzahnung ausgebildet ist. Das erste Stellelement und das zweite Stellelement weisen endseitig sich einander zugewandte Steuerkurven auf, welche bei einer Verlagerung des ersten Stellelementes entlang der Hauptachse der höhenverstellbaren Säule zu einer definierten Drehung des zweiten Stellelementes führt und so eine Kraftübertragung einer durch eine auf dem Sitzkörper sitzenden Person erzeugten Kraft auf das Bremsstellelement dadurch aktiviert oder deaktiviert, dass die sich zugewandten Verzahnungen entweder stirnseitig berühren oder ineinandergreifen. Nachteilig an dem gezeigten Sitzmöbel ist, dass die verwendeten Stellelemente relativ aufwendig und kostenintensiv ausgestaltet sind und die Funktionsfähigkeit durch Verschleiß und durch das Erfordernis einer relativ genauen Drehbewegung des zweiten Stellelementes auf Dauer beinträchtigt sein kann.

DE 39 33 815 A1 zeigt ein Sitz- und Stützmöbel mit einer höhenverstellbaren Säule, einem Sitz- und Stützkorpus, der an einem ersten Ende des höhenverstellbaren Säule um eine horizontale Achse zwischen einer ersten Endposition und einer zweiten Endposition schwenkbar angeordnet ist. Weiter umfasst das gezeigte Sitz- und Stützmöbel einen an einem dem ersten Ende gegenüberliegenden zweiten Ende der höhenverstellbaren Säule angeordneten Stoppmechanismus und einen Verriegelungsmechanismus zur lösbaren Verriegelung des Stoppmechanismus. Die Verriegelung des Stoppmechanismus wird über die Verschwenkung des Sitz- und Stützkorpus zwischen der ersten Endposition und der zweiten Endposition mittels einer einen als Stößel ausgebildetes erste Übertragungselement umfassenden Übertragungsvorrichtung gelöst. Der Stößel ist dabei durch eine Verschwenkung des Sitz- und Stützkorpus zwischen der ersten Endposition und der zweiten Endposition verlagerbar.

NL 1 037 497 NL zeigt einen Stuhl mit einer Säule, einem Sitz- und Stützkorpus, wobei der Sitz- und Stützkorpus über Schienen auf einem Hilfsrahmen zwischen einer ersten Endposition und einer zweiten Endposition verlagerbar angeordnet ist. Bei einer Verlagerung entlang der Schienen wird der Sitz- und Stützkorpus um eine horizontale Achse verschwenkt. An einem unteren Ende der Säule ist ein Stoppmechanismus angeordnet, welcher mehrere Bremsbacken umfasst, wobei der Stoppmechanismus über einen Verriegelungsmechanismus lösbar verriegelbar ist. Weiter umfasst der gezeigte Stuhl eine als Bowdenzug ausgebildete Übertragungsvorrichtung auf, welche über einen Handhebel die Verriegelung des Stoppmechanismus lösen kann.

WO 2019/038419 A1 zeigt einen Stuhl mit einer höhenverstellbaren Säule, einem Sitzkorpus, welcher an einer Trageinheit um eine horizontale Achse zwischen einer ersten Endposition und einer zweiten Endposition schwenkbar angeordnet ist. Die Trageinheit ist an einem ersten Ende der höhenverstellbaren Säule angeordnet. An der höhenverstellbaren Säule sind Stuhlbeine fest angeordnet, wobei an dem Ende der Stuhlbeine Rollen angeordnet sind. Weiter umfasst der gezeigte Stuhl einen an einem zweiten Ende der höhenverstellbaren Säule angeordnete Stoppmechanismus, welcher einen höhenverstellbaren Arretierfuß umfasst. Der höhenversstellbare Arretierfuß weist eine Führungskulisse auf, in welche ein fest mit der höhenverstellbaren Säule verbundener Führungsstift eingreift. Weiter umfasst der gezeigte Stuhl eine Übertragungsvorrichtung mit einem als Bowdenzug ausgebildeten ersten Übertragungselement, wobei durch Verschwenkung des Sitzkorpus zwischen der ersten Endposition und der zweiten Endposition eine Betätigung des Bowdenzuges erfolgt und so der Arretierfuß in eine Arretierstellung höhenverstellt wird.

DE 38 36 398 A1 zeigt einen Auslösemechanismus für eine höhenverstellbare Säule eines Sitzmöbels mit einer Übertragungsvorrichtung, wobei die Übertragungsvorrichtung einen Bowdenzug mit einem Zugmittel umfasst, wobei das Zugmittel abschnittsweise durch eine Schraubenfeder umgeben ist, wobei die Schraubenfeder das Zugmittel bzw. den Bowdenzug in eine Ausgangsstellung vorspannt, in der die höhenverstellbare Säule bezüglich einer Höhenverstellung verriegelt ist. Die Übertragungsvorrichtung umfasst weiter einen Kipphebel, welcher durch Betätigen des Bowdenzuges verlagerbar ist und so eine Ventilstift in einen Entriegelungsstellung bewegt.

CN 106 087 498 A1 zeigt einen Bowdenzug einer Bremse für eine elektrisches Dreirad mit einem Zugmittel, wobei das Zugmittel abschnittsweise durch eine spiralförmige Führungshülle umgeben ist.

KR 100 640 779 B1 zeigt einen Stoppmechanismus zur Verwendung in einem Sitzmöbel mit einem Gehäuse und einem relativ zu dem Gehäuse verlagerbaren Stoppelement. Das Stoppelement wird durch das Sitzen auf dem Sitzmöbel durch Gewichtskraft entgegen der Rückstellkraft einer Feder nach unten verlagert. Der Stoppmechanismus umfasst ein Tellerlager, so dass der mit einem oberen Teil einer höhenverstellbaren Säule verbundener Sitzkorpus auch bei aktivierter Stoppfunktion drehbar bleibt.

EP 3 311 703 A1 zeigt einen Stoppmechanismus zur Verwendung in einem Sitzmöbel mit einem Gehäuse und einem relativ zu dem Gehäuse verlagerbaren Stoppelement. Das Stoppelement ist dabei mit einer Übertragungsvorrichtung zu Übertragung einer Kraft, welche durch einen auf dem Sitzmöbel sitzenden Nutzer erzeugt wird, verbindbar. Die Übertragungsvorrichtung umfasst dabei einen Betätigungshebel und zwei gegeneinander verdrehbare Stellelemente, welche so durch Betätigen des Betätigungshebel gegeneinander verdreht werden können, dass eine Gewichtskraft des Nutzers auf das Stoppelement übertragen wird und dieses hierdurch nach unten in Richtung auf einen Boden verlagert wird bzw. so verdreht werden können, dass keine Übertragung der Gewichtskraft des Nutzers auf das Stoppelement erfolgt.

Es ist die Aufgabe der Erfindung, ein Sitz- und Stützmöbel anzugeben, das eine zuverlässige und benutzerfreundliche Bedienung ermöglicht. Weiter ist es die Aufgabe der Erfindung einen Stoppmechanismus zur Verwendung in einem Sitzmöbel anzugeben, welcher unabhängig von einer Höheneinstellung eines Sitzmöbels ver- und entriegelt werden kann.

Diese Aufgabe wird erfindungsgemäß durch ein Sitz- und Stützmöbel bzw. einen Stoppmechanismus mit den Merkmalen eines unabhängigen Anspruchs gelöst.

Gemäß einem Aspekt der Erfindung ist ein Sitz- und Stützmöbel geschaffen, umfassend eine höhenverstellbare Säule, einen Sitz- und Stützkorpus, der an einem ersten Ende der höhenverstellbaren Säule um zumindest eine horizontale Achse zwischen einer ersten Endposition und einer zweiten Endposition schwenkbar angeordnet ist. Weiter umfasst das Sitz- und Stützmöbel einen an einem zweiten Ende der höhenverstellbaren Säule angeordneten Stoppmechanismus und einen Verriegelungsmechanismus zur lösbaren Verriegelung des Stoppmechanismus, wobei mittels einer Übertragungsvorrichtung die Verriegelung des Stoppmechanismus durch den Verriegelungsmechanismus über die Verschwenkung des Sitz- und Stützkorpus zwischen der ersten Endposition und der zweiten Endposition gelöst wird. Weiter umfasst die Übertragungsvorrichtung ein erstes Übertragungselement, welches durch eine Verschwenkung des Sitz- und Stützkorpus zwischen der ersten Endposition und der zweiten Endposition verlagerbar ist. Das erfindungsgemäße Sitz- und Stützmöbel zeichnet sich dadurch aus, dassdie Übertragungsvorrichtung ein zweites Übertragungselement umfasst, wobei das erste Übertragungselement mit dem zweiten Übertragungselement gekoppelt ist und dass das zweite Übertragungselement als Tellerlager mit einem oberen Lagerring und einem unteren Lagerring ausgebildet ist.

Vorteilhaft kann so eine Verriegelung des Stoppmechanismus unabhängig von der Höheneinstellung der höhenverstellbaren Säule bzw. des Sitz- und Stützkorpus gelöst und so ein ungewolltes Verfahren des Sitz- und Stützmöbels bei Nutzung zum Stehsitzen zuverlässig verhindert werden. Weiter vorteilhaft lässt sich eine flexiblere Ausgestaltung der Übertragungsvorrichtung realisieren, sodass insbesondere die von der Gesamtstruktur des Sitz- und Stützmöbel vorgegebenen Randbedingungen besser berücksichtigt werden können und weiter gleichzeitig eine zuverlässige Funktionsweise der Übertragungsvorrichtung gesichert ist. Weiter vorteilhaft kann so die Verriegelung des Stoppmechanismus alleine in Abhängigkeit des Verschwenkungswinkels des Sitz- und Stützkorpus zwischen einer der ersten Endposition entsprechenden Sitzstellung und einer der zweiten Endposition entsprechenden Stehsitzstellung gesteuert werden. Vorteilhaft wird so unabhängig von der Körpergröße des Nutzers des Sitz- und Stützmöbels garantiert, dass insbesondere in der Stehsitzstellung des Sitz- und Stützkorpus eine Verriegelung des Stoppmechanismus gelöst und somit ein ungewolltes Verfahren des Sitz- und Stützmöbel zuverlässig verhindert ist und keine Verletzungsgefahr infolgedessen besteht.

Bevorzugt ist das erste Übertragungselement als Zugstab ausgebildet. Vorteilhaft ist der Zugstab starr ausgebildet und gelenkig an dem Sitz- und Stützkorpus gekoppelt. Zweckmäßigerweise ist die Stelle, an dem das erste Übertragungselement mit dem Sitz- und Stützkorpus gelenkig verbunden ist, von der horizontalen Achse, um welche der Sitz- und Stützkorpus verschwenkbar ist, beabstandet. Hierdurch wird vorteilhaft sichergestellt, dass bei einer Verschwenkung des Sitz- und Stützkorpus um die horizontale Achse eine Verlagerung des ersten Übertragungselementes parallel zu einer Richtung entlang der Längserstreckung der höhenverstellbaren Säule erfolgen kann.

In einer besonders bevorzugten Weiterbildung ist vorgesehen, dass an der höhenverstellbare Säule ein erstes Ende einer Feder und an dem Sitz- und Stützkorpus ein zweites Ende der Feder angeschlossen ist und dass die Feder eine Verschwenkung des Sitz- und Stützkorpus um die horizontale Achse unterstützt. Vorteilhaft wird so eine zuverlässige und benutzerfreundliche Möglichkeit geschaffen, die Verschwenkung des Sitz- und Stützkorpus um die horizontale Achse auszuführen, ohne dass eine große Kraft durch den Nutzer aufgewendet werden muss.

In einer bevorzugten Ausgestaltung ist das erste Übertragungselement mit einem ersten Ende gelenkig an der Feder befestigt. Vorteilhaft wird so eine zuverlässige Entriegelung des Stoppmechanismus ermöglicht, indem die Feder beispielsweise durch eine entsprechende Bedienvorrichtung betätigt und so eine Verschwenkung des Sitz- und Stützkorpus in Gang gesetzt wird. Dadurch, dass die Verschwenkung des Sitz- und Stützkorpus mittels der Übertragungsvorrichtung gleichzeitig zu einer Lösung der Verriegelung des Stoppmechanismus führt, kann auf benutzerfreundliche Weise auf Knopfdruck eine zuverlässige Aktivierung bzw. Entriegelung des Stoppmechanismus erfolgen. Weiter vorteilhaft wird durch die gelenkige Befestigung des ersten Übertragungselements an der Feder eine direkte Beanspruchung des Sitz- und Stützkorpus aufgrund der während der Verschwenkung des Sitz- und Stützkorpus durch das erste Übertragungselement vermieden und so Verschleißerscheinungen an dem Sitz- und Stützkorpus weitgehend unterbunden.

Alternativ ist vorgesehen, dass das erste Übertragungselement gelenkig an dem Sitz- und Stützkorpus befestigt ist. Vorteilhaft wird kein zusätzliches Zwischenteil, beispielsweise eine Feder oder ein Zwischenhebel oder Ähnliches benötigt, sodass eine besonders bauraum- und kostensparende Ausgestaltung des Sitz- und Stützmöbels möglich ist.

▪ In einer zweckmäßigen Weiterbildung sind der obere Lagerring und der untere Lagerring relativ zueinander um eine vertikal verlaufende Achse drehbar. Vorteilhaft können so Drehbewegungen von Bauteilen, welche mittelbar oder unmittelbar mit dem oberen Lagerring gekoppelt sind, und von Bauteilen, welche mittelbar oder unmittelbar mit dem unteren Lagerring gekoppelt sind, unabhängig voneinander erfolgen, so dass insbesondere die vorgesehenen Funktionen des Sitz- und Stützkorpus durch die Übertragungsvorrichtung nicht beeinträchtigt werden. Insbesondere ist eine Drehung des Sitz- und Stützkorpus um eine vertikale Achse möglich, ohne dass eine Beeinträchtigung der Funktion der Übertragungsvorrichtung folgt.

Zweckmäßigerweise ist das zweite Übertragungselement axial in eine parallel zu einer Längserstreckung der höhenverstellbaren Säule im Wesentlichen parallele Richtung verlagerbar. Vorteilhaft wird so die Verlagerung des ersten Übertragungselements in Richtung parallel zu einer Längserstreckung der höhenverstellbaren Säule auf das zweite Übertragungselement übertragen, wobei insbesondere bei einer Ausgestaltung des zweiten Übertragungselementes als Tellerlager die Möglichkeit besteht, Drehbewegungen des Sitz- und Stützkorpus um eine vertikale Achse und die Verlagerung des Übertragungselementes in Richtung parallel zu der Längserstreckung der höhenverstellbare Säule voneinander abzukoppeln bzw. unabhängig voneinander auszuführen.

In einer bevorzugten Ausgestaltung ist vorgesehen, dass die Übertragungsvorrichtung ein drittes Übertragungselement umfasst, wobei das dritte Übertragungselement mit zumindest einem von erstem Übertragungselement und zweitem Übertragungselement gekoppelt ist. Besonders bevorzugt ist das dritte Übertragungselement mit dem zweiten Übertragungselement gekoppelt. Vorteilhaft können so insbesondere Drehbewegungen des ersten Übertragungselement und des dritten Übertragungselementes voneinander unabhängig erfolgen und gleichzeitig zumindest eine Verlagerung in eine Richtung, bevorzugt parallel zu einer Längserstreckung der höhenverstellbaren Säule, gemeinsam aufgrund der Kopplung erfolgen.

Besonders bevorzugt ist das dritte Übertragungselement als Bowdenzug mit zumindest einem Zugmittel ausgebildet. In einer zweckmäßigen Weiterbildung ist das Zugmittel des Bowdenzugs zumindest abschnittsweise von einer Führungshülle umgeben. Vorteilhaft wird das Zugmittel hierdurch vor äußeren Einflüssen geschützt und gleichzeitig wird eine verbesserte Führung des Zugmittels relativ zu den weiteren Bauteilen des Sitz- und Stützmöbels gewährleistet. Dies ist besonders dann vorteilhaft, wenn das Zugmittel eine große Länge aufweist.

In einer zweckmäßigen Weiterbildung ist vorgesehen, dass die Führungshülle zumindest abschnittsweise spiralförmig ausgebildet ist. Vorteilhaft wird hierdurch ermöglicht, dass der Abstand zwischen zwei sich gegenüberliegenden Enden des Zugmittels vergrößert werden kann, ohne dass eine Zugkraft zwischen den beiden sich gegenüberliegenden Enden entsteht. Hierdurch wird vorteilhaft insbesondere eine Verstellung der Höhe der den Sitz- und Stützkorpus tragenden Säule ermöglicht, ohne dass eine unbeabsichtigte Entriegelung des Verriegelungsmechanismus bzw. Aktivierung des Stoppmechanismus erfolgt.

Zweckmäßigerweise umfasst der Verriegelungsmechanismus ein erstes Rastelement. Zweckmäßigerweise ist das Rastelement axial in Richtung parallel zu einer Längserstreckung der höhenverstellbaren Säule verlagerbar. Weiter zweckmäßig ist das erste Rastelement mit der Übertragungsvorrichtung gekoppelt. Besonders bevorzugt ist das erste Rastelement mit einem Übertragungselement der Übertragungsvorrichtung gekoppelt. Vorteilhaft ist so das erste Rastelement mittels der Übertragungsvorrichtung derart verlagerbar, dass der Verriegelungsmechanismus bzw. das erste Rastelement über eine Verschwenkung des Sitz- und Stützkorpus gesteuert bzw. verlagert werden kann.

In einer bevorzugten Ausgestaltung ist vorgesehen, dass das erste Rastelement als Rastring ausgebildet ist. Der Rastring weist bevorzugt eine hohlzylindrische Form auf. Besonders bevorzugt ist das erste Rastelement mit der Übertragungsvorrichtung bzw. einem Übertragungselement der Übertragungsvorrichtung gekoppelt. Vorteilhaft ist der Rastring konzentrisch an der höhenverstellbaren Säule angeordnet, sodass der Rastring entlang der höhenverstellbare Säule ausreichend definiert geführt werden kann, während der Rastring mittels der Übertragungsvorrichtung verlagert wird. Hierdurch wird vorteilhaft vermieden, dass das erste Rastelement während seiner Verlagerung verkeilt oder klemmt.

In einer vorteilhaften Weiterbildung umfasst der Verriegelungsmechanismus ein zweites Rastelement. In einer bevorzugten Ausgestaltung ist das zweite Rastelement als Rastfeder ausgebildet. Weiter ist das zweite Rastelement bevorzugt lösbar mit der höhenverstellbaren Säule verbindbar. Vorteilhaft ist hierdurch das zweite Rastelement in der Lage, gegenüber einer Verlagerung relativ zu dem Sitz- und Stützmöbel bzw. relativ zu der höhenverstellbaren Säule zu verriegelnde Bauteile durch Verbindung mit dem zweiten Rastelement festzustellen bzw. zu verriegeln.

Besonders bevorzugt ist das zweite Rastelement mit einem Stoppelement des Stoppmechanismus verbunden. Das Stoppelement ist bevorzugt als Reibstück ausgebildet, welches auf einer Oberfläche, auf welcher das Sitz- und Stützmöbel verfahren werden kann, gedrückt werden kann, um so eine Stoppfunktion bereitzustellen. Durch den Umstand, dass das Stoppelement mit dem zweiten Rastelement verbunden ist, kann die Stoppfunktion bzw. die Auslösung des Stoppmechanismus durch Beeinflussung des jeweiligen Rastzustandes des zweiten Rastelementes erfolgen.

In einer vorteilhaften Ausgestaltung ist vorgesehen, dass das erste Rastelement in einem verriegelten Zustand des Verriegelungsmechanismus das zweite Rastelement in einer Raststellung gegenüber der höhenverstellbaren Säule vorspannt. Besonders bevorzugt ist das zweite Rastelement als Rastfeder ausgebildet, welche zwischen einer Raststellung und einer Freigabestellung verlagerbar ist. Vorteilhaft ist so die Entriegelung des Stoppmechanismus über eine Verlagerung des ersten Rastelementes möglich, da dieses das als Rastfeder ausgebildete zweite Rastelement hin zu der Raststellung vorspannt.

In einer zweckmäßigen Ausgestaltung weist das zweite Rastelement einen radial von der höhenverstellbaren Säule fort ragenden Vorsprung auf, welcher in einer Raststellung des zweiten Rastelementes mit einer an einem Gehäuse des Verriegelungsmechanismus vorgesehenen Raststelle in Eingriff steht. Die Raststelle ist dabei bevorzugt als eine Rastkante an einer Innenseite des Gehäuses ausgebildet, an welcher der an dem zweiten Rastelement vorgesehenen Vorsprung eingreifen kann, sodass das zweite Rastelement an einer Verlagerung in Richtung einer Längserstreckung der höhenverstellbare Säule gehindert ist.

In einer bevorzugten Weiterbildung ist die höhenverstellbare Säule zweiteilig ausgebildet. Besonders bevorzugt umfasst die höhenverstellbare Säule ein erstes Gehäuseteil und ein zweites Gehäuseteil. Hierdurch wird eine Höheneinstellung des Sitz- und Stützkorpus vorteilhaft dadurch ermöglicht, dass die beiden Gehäuseteile der höhenverstellbaren Säule entlang einer Richtung ihrer Längserstreckung relativ zueinander verlagert werden und so die Länge der höhenverstellbaren Säule variabel eingestellt werden kann. Alternativ ist die höhenverstellbare Säule dreiteilig ausgebildet und umfasst drei Gehäuseteile. Vorteilhaft ist so ein größerer Höhenbereich einstellbar.

Besonders bevorzugt ist die höhenverstellbare Säule durch ein Federsystem höhenverstellbar. Zweckmäßigerweise ist das Federsystem zentral in der höhenverstellbaren Säule aufgenommen. Das Federsystem umfasst bevorzugt eine Gasfeder, welche über eine Betätigungsvorrichtung auslösbar ist, welche bevorzugt an dem Sitz- und Stützkorpus angeordnet ist, sodass eine Höheneinstellung des Sitz- und Stützkorpus auf Knopfdruck oder über einen Hebelzug auf benutzerfreundliche Weise erfolgen kann. Besonders bevorzugt ist das Federsystem mehrstufig ausgebildet. Vorteilhaft kann das Federsystem so einen weiten Bereich von Höheneinstellungen abdecken und die Nutzbarkeit des Sitz- und Stützmöbels für einen größeren Personenkreis mit unterschiedlichen Körpergrößen verbessern.

Zweckmäßigerweise ist die höhenverstellbare Säule mit einem Rollensystem verbindbar. Bevorzugt erfolgt die Verbindung an dem zweiten Ende der höhenverstellbaren Säule, an welchem der Stoppmechanismus angeordnet ist. Vorteilhaft kann so das Sitz- und Stützmöbel auf einer Bodenoberfläche, auf welchem das Sitz- und Stützmöbel steht, verfahren werden.

Nach einem weiteren Aspekt der Erfindung ist ein Stoppmechanismus zur Verwendung in einem Sitzmöbel geschaffen, insbesondere einem Sitz- und Stützmöbel wie vorstehend beschrieben, umfassend ein Gehäuse, ein relativ zu dem Gehäuse verlagerbares Stoppelement, ein mit dem Stoppelement gekoppelten Verriegelungsmechanismus zur lösbaren Verriegelung der Verlagerung des Stoppelementes und eine mit dem Verriegelungsmechanismus gekoppelte Übertragungsvorrichtung, wobei die Übertragungsvorrichtung einen Bowdenzug mit zumindest einem Zugmittel umfasst, wobei das Zugmittel des Bowdenzugs abschnittsweise von einer Führungshülle umgeben ist, welche in einer axialen Richtung des Bowdenzuges expandierbar ausgebildet ist. Der Stoppmechanismus zeichnet sich dadurch aus, dass die Führungshülle und das Zugmittel zumindest abschnittsweise spiralförmig ausgebildet sind. Vorteilhaft wird hierdurch die Möglichkeit geschaffen, den Stoppmechanismus manuell beispielsweise durch Betätigung eines Hebels oder eines Knopfes zu entriegeln und so eine Stoppfunktion bei Bedarf und unabhängig von einer Hubfunktion zur Höheneinstellung zu aktivieren. Weiter vorteilhaft kann eine Dehnung des Zugmittels bzw. die Gesamtlänge des Bowdenzugs variiert werden, ohne dass eine Kraft zwischen den beiden Enden des Zugmittels und somit eine unbeabsichtigte Entriegelung des Stoppmechanismus eintritt.

Nach einem weiteren Aspekt der Erfindung ist ein Stoppmechanismus zur Verwendung in einem Sitzmöbel mit einer höhenverstellbaren Säule geschaffen, wie vorstehend beschrieben, umfassend ein Gehäuse, ein relativ zu dem Gehäuse verlagerbares Stoppelement, ein mit dem Stoppelement gekoppelten Verriegelungsmechanismus zur lösbaren Verriegelung der Verlagerung des Stoppelementes und eine mit dem Verriegelungsmechanismus gekoppelte Übertragungsvorrichtung, wobei die Übertragungsvorrichtung ein als Tellerlager mit einem oberen Lagerring und einem unteren Lagerring ausgebildetes Übertragungselement umfasst. Der Stoppmechanismus zeichnet sich dadurch aus, dass der Verriegelungsmechanismus ein erstes Rastelement umfasst, dass das erste Rastelement mit der Übertragungsvorrichtung gekoppelt ist, und dass das erste Rastelement axial in Richtung parallel zu einer Längserstreckung der höhenverstellbaren Säule verlagerbar ist.Vorteilhaft kann das Übertragungselement insbesondere als Entkopplungsglied für mit dem Übertragungselement gekoppelte Bestandteile des Sitz- und Stützmöbel oder andere Bestandteile, insbesondere weitere Übertragungselemente der Übertragungsvorrichtung, bezüglich einer Drehbewegung um eine vertikale Achse genutzt werden.

Weitere Vorteile, Eigenschaften und Weiterbildungen der Erfindung ergeben sich aus den abhängigen Ansprüchen sowie aus der nachstehenden Beschreibung eines bevorzugten Ausführungsbeispiels.

Die Erfindung wird nachstehend unter Bezugnahme auf die anliegenden Zeichnungen anhand eines bevorzugten Ausführungsbeispiels näher erläutert.
- Fig. 1: zeigt ein Sitz- und Stützmöbel mit einem Sitz- und Stützkorpus in einer ersten Endposition in einer aufgeschnittenen Seitenansicht.
- Fig. 2: zeigt eine vergrößerte Ansicht im Bereich des zweiten Übertragungselementes der Übertragungsvorrichtung des Sitz- und Stützmöbels aus Fig. 1 .
- Fig. 3: zeigt eine vergrößerte Ansicht des Verrieglungsmechanismus und des Stoppmechanismus des Sitz- und Stützmöbels aus Fig. 1.
- Fig. 4: zeigt das Sitz- und Stützmöbel aus Fig. 1 in einer zweiten Endposition mit einem ausgefahrenen Stoppmechanismus in einer aufgeschnittenen Seitenansicht.
- Fig. 5: zeigt eine vergrößerte Ansicht im Bereich des zweiten Übertragungselementes der Übertragungsvorrichtung des Sitz- und Stützmöbels aus Fig. 4.
- Fig. 6: zeigt eine vergrößerte Ansicht des Verrieglungsmechanismus und des Stoppmechanismus des Sitz- und Stützmöbels aus Fig. 4.

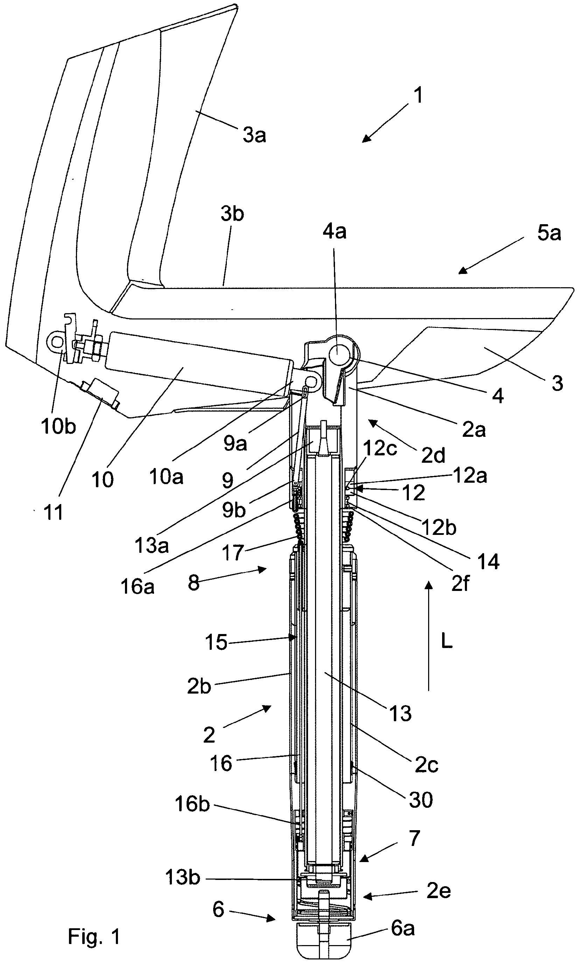

Fig. 1 zeigt ein Ausführungsbeispiel eines Sitz- und Stützmöbels 1 mit einem Sitz- und Stützkorpus 3 in einer ersten Endposition 5a in einer aufgeschnittenen Seitenansicht. Das Sitz- und Stützmöbel 1 umfasst eine höhenverstellbare Säule 2, welche dreiteilig ausgebildet ist und ein erstes Gehäuseteil 2a, ein zweites Gehäuseteil 2b und ein drittes Gehäuseteil 2c umfasst, wobei das dritte Gehäuseteil 2c in das zweite Gehäuseteil 2b eingeschoben ist und relativ zu dem zweiten Gehäuseteil 2b verlagerbar ist. Das dritte Gehäuseteil 2c weist dabei an seinem Aussenumfang Widerhaken 30 auf, welche die Verlagerung des dritten Gehäuseteils 2c bremsen und als Anschlag dienen. Die höhenverstellbare Säule 2 ist in einer vertikalen Richtung L längserstreckt ausgebildet. An dem ersten Gehäuseteil 2a der höhenverstellbaren Säule 2, welches an einem ersten Ende 2d der höhenverstellbaren Säule 2 angeordnet ist, ist ein Sitz- und Stützkorpus 3 angeschlossen bzw. angeordnet, wobei der Sitz- und Stützkorpus 3 um eine horizontale Achse 4 schwenkbar ist. Die Schwenkbarkeit des Sitz- und Stützkorpus 3 ist hierbei durch ein Eingelenk 4a realisiert, welches an dem ersten Gehäuseteil 2a der höhenverstellbaren Säule 2 angeordnet ist. Der Sitz- und Stützkorpus 3 weist eine Rückenlehne 3a und eine Sitzfläche 3b auf. In der hier gezeigten ersten Endposition 5a des Sitz- und Stützkorpus 3 ist die Sitzfläche 3b im Wesentlichen horizontal und die Rückenlehne 3a in etwa vertikal ausgerichtet, sodass eine Person auf dem Sitz- und Stützmöbel 1 sitzen kann.

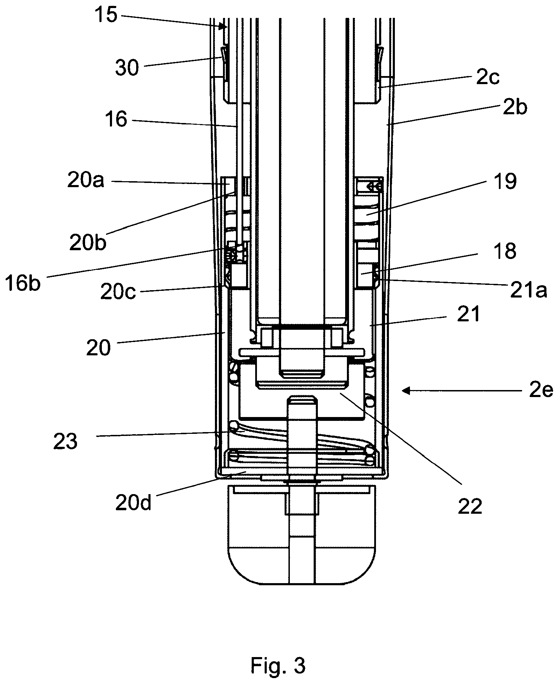

An einem dem ersten Gehäuseteil 2a abgewandten Ende 2e des zweiten Gehäuseteiles 2b ist ein Stoppmechanismus 6 vorgesehen, dessen Aufbau in Fig. 3 näher gezeigt wird. Der Stoppmechanismus 6 ist durch einen vorgelagerten Verriegelungsmechanismus 7 verriegelt, sodass ein Nutzer des Sitz- und Stützmöbels 1, während dieser darauf sitzt, die Position relativ zu einem Boden, auf dem das Sitz- und Stützmöbel 1 steht, verändern kann. Die hierzu notwendige Verfahrbarkeit des Sitz- und Stützmöbel 1 wird dabei über ein hier nicht gezeigtes Rollensystem sichergestellt, welches insbesondere lösbar mit der höhenverstellbaren Säule 2 verbunden werden kann.

Der Verriegelungsmechanismus 7 ist mit einer Übertragungsvorrichtung 8 gekoppelt, wobei die Übertragungsvorrichtung 8 eine durch die Schwenkbewegung des Sitz- und Stützkorpus 3 erzeugte Kraft auf den Verriegelungsmechanismus 7 überträgt, sodass eine Entriegelung des Stoppmechanismus 6 aufgrund der Schwenkbewegung des Sitz- und Stützkorpus 3 erfolgen kann.

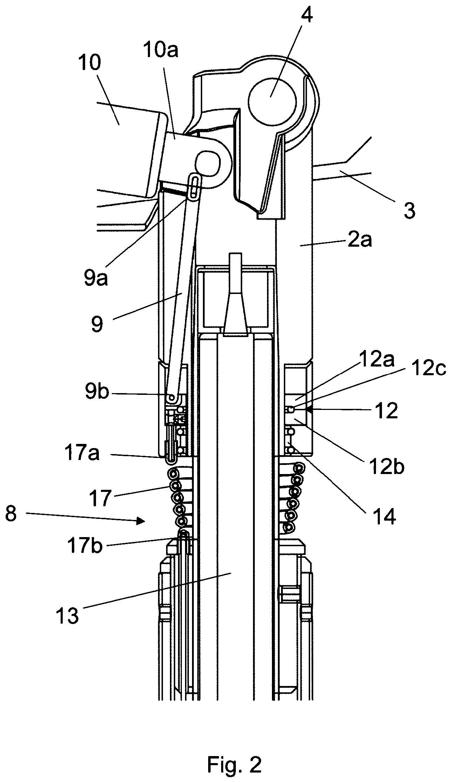

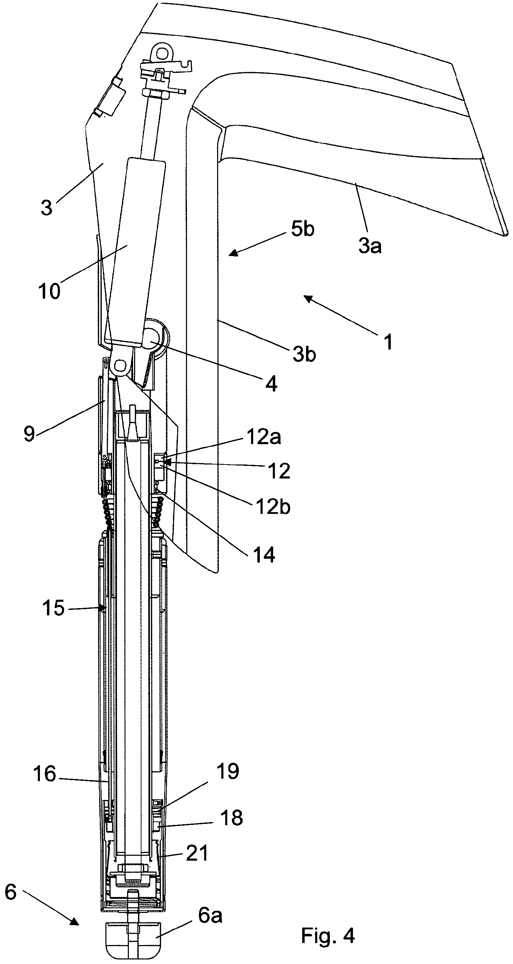

Die Übertragungsvorrichtung 8 ist in einer vergrößerten Ansicht in Fig. 2 gezeigt und umfasst ein erstes Übertragungselement 9, welches als Zugstab ausgebildet ist und in dem ersten Gehäuseteil 2a angeordnet ist und mit einem ersten Ende 9a an einem ersten Ende 10a einer Feder 10 gelenkig gekoppelt ist. Die Feder 10 ist in dem hier gezeigten Ausführungsbeispiel als Gasfeder ausgebildet und mit einem ersten Ende 10a an dem ersten Gehäuseteil 2a der höhenverstellbaren Säule 2 gelenkig gekoppelt. Ein dem ersten Ende 10a der Feder 10 gegenüberliegendes Ende 10b ist gelenkig an dem Sitz- und Stützkorpus 3 befestigt, wie in Fig. 1 zu erkennen. Die Gasfeder 10 unterstützt so die Schwenkbewegung des Sitz- und Stützkorpus 3 zwischen der in Fig. 1 gezeigten ersten Endposition 5a und der in Figur 4 gezeigten zweiten Endposition 5b um die horizontale Achse 4. Die Gasfeder 10 ist dabei über eine Betätigungsvorrichtung 11 aktivierbar, welche an dem Sitz- und Stützkorpus 3 für den Nutzer gut erreichbar angeordnet ist, sodass eine kraftschonende Verschwenkung des Sitz- und Stützkorpus 3 einfach und sicher ermöglicht wird.

Ein zweites Ende 9b des Zugstabes 9 ist mit einem zweiten Übertragungselement 12 gelenkig verbunden. Das zweite Übertragungselement 12 ist als Tellerlager ausgebildet, welches einen oberen Lagerring 12a und einen unteren Lagerring 12b umfasst, wobei der obere Lagerring 12a und der untere Lagerring 12b gegeneinander um eine vertikale Achse parallel zu der oder in Richtung L der Längserstreckung der höhenverstellbaren Säule 2 drehbar sind, da zwischen dem oberen Lagerring 12a und dem unteren Lagerring 12b ein Kugellager 12c angeordnet ist. Das ringförmige Tellerlager 12 umläuft ein mehrstufiges Federsystem 13, welches als Gasfeder ausgebildet ist und mit einem ersten Ende 13a in das erste Gehäuseteil 2a der höhenverstellbare Säule 2 hineinragt und mit einem dem ersten Ende 13a gegenüberliegenden Ende 13b mit dem Stoppmechanismus 6, wie nachstehend näher erläutert, verbunden ist.

Das Tellerlager 12 ist axial in Richtung der Längserstreckung L der höhenverstellbare Säule 2 verlagerbar, wobei das Tellerlager 12 durch das mehrstufige Federsystem 13, welches zentral in der höhenverstellbare Säule 2 angeordnet ist, während der Verlagerung geführt wird. Zwischen einem ringförmigen Boden 2f des ersten Gehäuseteils 2a und dem Tellerlager 12 ist ein Gelenkdrehlager 14 angeordnet, welches dazu dient, dass sich der untere Lagerteller 12b drehen kann, wenn dieser, wie in Fig. 2 gezeigt, auf dem Gelenkdrehlager 14 aufliegt.

Die Übertragungsvorrichtung 8 umfasst weiter ein drittes Übertragungselement 15, welches als Bowdenzug ausgebildet ist. Der Bowdenzug 15 umfasst dabei ein als Draht ausgebildetes Zugmittel 16 bzw. eine Seele, wobei ein erstes Ende 16a des Zugmittels 16 mit dem unteren Lagerring 12b und einen zweites Ende 16b des Zugmittels 16 mit dem Verriegelungsmechanismus 7 gekoppelt ist. Ein in der Nähe des ersten Endes 16a befindlicher Abschnitt des Zugmittels 16 ist von einer spiralförmigen flexiblen Führungshülle 17 umgeben, wobei die Führungshülle 17 mit einem ersten Ende 17a an dem ersten Gehäuseteil 2a der höhenverstellbare Säule 2 und mit einem zweiten Ende 17b an dem dritten Gehäuseteil 2c der höhenverstellbare Säule 2 gekoppelt ist. Hierdurch wird die Führungshülle 17 bei einer Verstellung der Höhe des Sitz- und Stützkorpus 3 entsprechend gedehnt, da das erste Ende 17a und das zweite Ende 17b voneinander während der Höhenverstellung gemeinsam mit den beiden Gehäuseteilen 2a, 2c weiter voneinander beabstandet werden. Dabei wird das dritte Gehäuseteil 2c ebenfalls nach oben verlagert, da das zweite Ende 17b der Führungshülle 17 mit diesem gekoppelt ist, jedoch wird die Verlagerung durch die Widerhaken 30 gebremst bzw. begrenzt, so dass der Abstand zwischen dem ersten Gehäuseteil 2a und dem dritten Gehäuseteil 2c bei einer maximalen Höheneinstellung der höhenverstellbaren Säule 2 vergrößert ist. Vorteilhaft wird hierdurch vermieden, dass durch eine Höhenverstellung der Säule 2 eine Kraft zwischen dem ersten Ende 16a und dem zweiten Ende 16b des Zugmittels 16 entsteht und so eine unbeabsichtigte Entriegelung des Stoppmechanismus 6 folgt.

Fig. 3 zeigt eine vergrößerte Ansicht des Verrieglungsmechanismus 7 und des Stoppmechanismus 6 des Sitz- und Stützmöbels aus Fig. 1. In dieser Ansicht ist gut zu erkennen, dass der Verriegelungsmechanismus 7 ein als Rastring ausgebildetes erstes Rastelement 18 umfasst. Der Rastring 18 ist mit dem zweiten Ende 16b des durch das dritte Gehäuseteil 2c geführten Zugmittels 16 des Bowdenzugs 15 gekoppelt und kann bei entsprechender Belastung durch den Bowdenzug 15 nach oben verlagert werden. Der Rastring 18 wird durch eine erste Druckfeder 19, welche fest mit einem in dem zweiten Ende 2e der höhenverstellbare Säule 2 angeordneten Gehäuse 20 verbunden ist, in einer Richtung hin zu dem zweiten Ende 2e der höhenverstellbare Säule 2 vorgespannt. Das Gehäuse 20 ist dabei fest in dem zweiten Gehäuseteil 2b angeordnet. In einem Deckenbereich 20a des Gehäuses 20 ist eine Aussparung 20b vorgesehen, durch welche das Zugmittel 16 des Bowdenzugs 15 hindurchgeführt ist.

Weiter ist in der in Fig. 3 gezeigten vergrößerten Ansicht zu erkennen, dass der Verriegelungsmechanismus 7 ein zweites Rastelement 21 umfasst, welches als Rastfeder ausgebildet ist. Die Rastfeder 21 ist dabei hohlzylindrisch ausgebildet und weist einen radial nach außen weisenden Vorsprung 21a auf, welcher mit einer an der Innenseite des Gehäuses 20 des Verriegelungsmechanismus 7 vorgesehenen Rastkante 20c in der hier gezeigten Raststellung in Eingriff steht und so eine Verlagerung des zweiten Rastelementes 21 nach unten verhindert. Die Rastfeder 21 ist dabei aufgrund seiner Eigenspannung in Richtung zu einem Zentrum der höhenverstellbaren Säule 2, also in Richtung auf eine Freigabestellung, vorgespannt. Die Rastfeder 21 wird dadurch in der Raststellung gehalten, dass das als Rastring ausgebildete erste Rastelement 18 im Bereich des Vorsprungs 21a mit einer Innenseite 21b des zweiten Rastelementes 21 reibschlüssig verbunden ist. Der Rastring 18 weist einen dem Innendurchmesser der Rastfeder 21 entsprechenden Außendurchmesser auf, sodass die Rastfeder 21 in Raststellung verlagert wird.

Die Rastfeder 21 ist über ein Zwischenstück 22 zum einem mit dem zweiten Ende 13b des Federsystems 13 und zum anderen mit dem Stoppmechanismus 6 fest verbunden. Hierdurch ist das als Rastfeder ausgebildete zweite Rastelement 21 mit dem Stoppmechanismus 6 gekoppelt und kann so in der hier gezeigten Raststellung einer Verlagerung eines als Reibstück ausgebildeten Stoppelementes 6a des Stoppmechanismus 6 unterbinden.

Zwischen der Rastfeder 21 und einem Boden 20d des Gehäuses 20 ist eine zweite Druckfeder 23 angeordnet. Die zweite Druckfeder 23 spannt den Stoppmechanismus bzw. die Rastfeder 21 in Richtung auf den Sitz- und Stützkorpus 3 vor. Hierdurch wird das Wiedereinrasten des zweiten Rastelementes 21 sichergestellt, wenn das erste Rastelement 18 nicht durch den Bowdenzug 15 nach oben verlagert ist.

Fig. 4 zeigt das Sitz- und Stützmöbel 1 aus Fig. 1 in einer Seitenansicht mit einem Sitz- und Stützkorpus 3 in einer zweiten Endposition 5b und ausgefahrenem Stoppmechanismus 6. In der zweiten Endposition 5b ist der Sitz- und Stützkorpus 3 um die horizontale Achse 4, unterstützt durch die Feder 10, derart verschwenkt, dass die Sitzfläche 3b im Wesentlichen vertikal und die Rückenlehne 3a in etwa horizontal ausgerichtet, sodass eine Person auf einer Rückseite der Rückenlehne 3a in einer erhöhten Position stehsitzen kann.

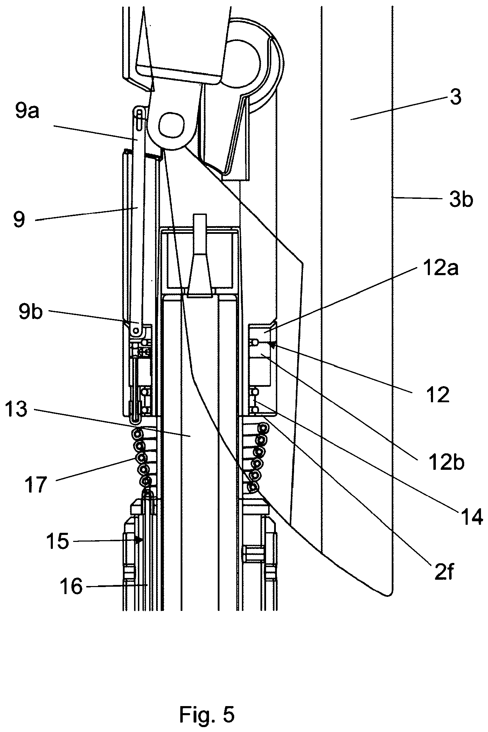

Wie in der vergrößerten Ansicht im Bereich des zweiten Übertragungselementes der Übertragungsvorrichtung des Sitz- und Stützmöbels in Fig. 5 gut zu erkennen, ist das als Zugstab ausgebildete erste Übertragungselement 9, welches gelenkig an der ebenfalls nunmehr verschwenkten Feder 10 befestigt ist, nach oben verlagert worden, sodass ein Zug auf das als Tellerlager ausgebildete zweite Übertragungselement 12 entsteht und dieses im Resultat nach oben verlagert worden ist. Auf das Zugmittel 16 des als Bowdenzug ausgebildeten dritten Übertragungselementes 15, welches mit dem zweiten Übertragungselement 12, hier dem unteren Lagerring 12b, gekoppelt ist, wirkt entsprechend ebenfalls eine Zugkraft, sodass das erste Rastelement 18 gegen die Vorspannung der ersten Druckfeder 19 nach oben verlagert ist und sich das als Rastfeder ausgebildete zweite Rastelement 21 in der Freigabestellung befindet.

Wie in Fig. 4 zu sehen, ist das entriegelte Stoppelement 6a des Stoppmechanismus 6 bzw. das mit dem Stoppelement 6a fest verbundene zweite Rastelement 21 aufgrund einer von oben auf den Sitz- und Stützkorpus 3 wirkenden Kraft nach unten verlagert, sodass das Stoppelement 6a, welches als Reibstück ausgebildet ist, auf einen Boden, auf dem das Sitz- und Stützmöbel 1 steht, durch das Gewicht des Nutzers gedrückt wird und eine entsprechende Bremswirkung entsteht, welche das Verfahren des Sitz- und Stützmöbel 1 verhindert. Vorteilhaft wird so die Gefahr, dass der Nutzer durch eine Bewegung des Sitz- und Stützmöbel 1 während der Stehsitzens von dem Sitz- und Stützkorpus 3 herunterrutscht, vermindert.

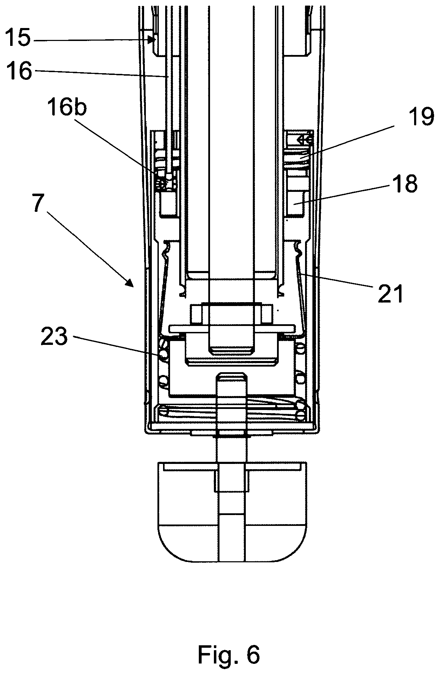

Fig. 6 zeigt eine vergrößerte Ansicht des Verrieglungsmechanismus 7 und des Stoppmechanismus 6 des Sitz- und Stützmöbels aus Fig. 3. Es ist gut zu erkennen, dass das als Rastring ausgebildete erste Rastelement 18 relativ zu dem Gehäuse 20 aufgrund der Kopplung mit dem zweiten Ende 16b des Zugmittel 16 des Bowdenzugs 15 gegen die Vorspannung der ersten Druckfeder 19 nach oben verlagert ist und so die reibschlüssige Verbindung zwischen dem ersten Rastelement 18 und dem als Rastfeder ausgebildeten zweiten Rastelement 21 nicht mehr besteht und aufgrund der Eigenspannung die Rastfeder 21 nach innen verlagert ist und so der Vorsprung 21a nicht mehr im Eingriff mit der Rastkante 20c steht. Hierdurch kann das Stoppelement 6a aufgrund der Kopplung mit dem freigegebenen zweiten Rastelement 21 und dem Federsystem 13 durch entsprechende Krafteinwirkung von oben auf den Sitz- und Stützkorpus 3 in Richtung auf einen Boden, auf dem das Sitz- und Stützmöbel steht, gegen die Vorspannung der zweiten Druckfeder 23 nach unten gedrückt und so eine Stoppfunktion unabhängig von der Höheneinstellung des Sitz- und Stützkorpus 3 bereitgestellt werden.

Vorstehend wurde die Erfindung anhand eines Ausführungsbeispieles erläutert, bei dem die Schwenkbewegung des Sitz- und Stützkorpus 3 durch eine Feder 10 unterstützt wird und bei der die Übertragungsvorrichtung mit der Feder 10 gekoppelt ist. Es versteht sich, dass die Übertragungsvorrichtung mit einem der Übertragungselemente auch direkt gelenkig an dem Sitz- und Stützkorpus angeschlossen sein kann, soweit der Befestigungspunkt radial von der horizontalen Schwenkachse des Sitz- und Stützkorpus beabstandet ist.

Vorstehend wurde die Erfindung anhand eines Ausführungsbeispiels erläutert, bei dem das erste Übertragungselement derart an dem Sitz- und Stützkorpus bzw. der Feder gelenkig angeordnet ist, dass das erste Übertragungselement bei einer Verschwenkung von der ersten Endposition zu der zweiten Endposition nach oben gezogen wird und so das erste Rastelement und das zweite Rastelement voneinander getrennt werden, sodass eine Entriegelung des Verriegelungsmechanismus erfolgt. Es versteht sich, dass das erste Übertragungselement auch derart an dem Sitz- und Stützkorpus bzw. der Feder gelenkig angeordnet sein kann, dass das erste Übertragungselement bei einer Verschwenkung von der ersten Endposition zu der zweiten Endposition nach unten gedrückt wird und auf diese Weise eine Entriegelung erfolgt.

## Patentansprüche

1. Sitz- und Stützmöbel, umfassend
eine höhenverstellbare Säule (2),
einen Sitz- und Stützkorpus (3), der an einem ersten Ende (2a) der höhenverstellbaren Säule (2) um zumindest eine horizontale Achse (4) zwischen einer ersten Endposition (5a) und einer zweiten Endposition (5b) schwenkbar angeordnet ist,
einen an einem zweiten Ende (2b) der höhenverstellbaren Säule (2) angeordneten Stoppmechanismus (6), und
einen Verrieglungsmechanismus (7) zur lösbaren Verriegelung
des Stoppmechanismus (6),
wobei mittels einer Übertragungsvorrichtung (8) die Verriegelung des Stoppmechanismus (6) durch den Verriegelungsmechanismus (7) über die Verschwenkung des Sitz- und Stützkorpus (3) zwischen der ersten Endposition (5a) und der zweiten Endposition (5b) gelöst wird,
wobei die Übertragungsvorrichtung (8) ein erstes Übertragungselement (9) umfasst, welches durch eine Verschwenkung des Sitz- und Stützkorpus (3) zwischen der ersten Endposition (5a) und der zweiten Endposition (5b) verlagerbar ist,
**dadurch gekennzeichnet,**
**dass** die Übertragungsvorrichtung (8) ein zweites Übertragungselement (12) umfasst,
**dass** das erste Übertragungselement (9) mit dem zweiten Übertragungselement (12) gekoppelt ist, und
**dass** das zweite Übertragungselement (12) als Tellerlager mit einem oberen Lagerring (12a) und einem unteren Lagerring (12b) ausgebildet ist.

2. Sitz- und Stützmöbel nach Anspruch 1, **dadurch gekennzeichnet, dass** das erste Übertragungselement (9) als Zugstab ausgebildet ist.

3. Sitz- und Stützmöbel nach Anspruch 1 oder 2, **dadurch gekennzeichnet, dass** an der höhenverstellbaren Säule (2) ein erstes Ende (10a) einer Feder (10) und an dem Sitz- und Stützkorpus (3) ein zweites Ende (10b) der Feder (10) angeschlossen ist, und dass die Feder (10) eine Verschwenkung des Sitz- und Stützkorpus (3) um die horizontale Achse (4) unterstützt, wobei das erste Übertragungselement (9) mit einem ersten Ende (9a) an der Feder (10) befestigt ist.

4. Sitz- und Stützmöbel nach einem der vorhergehenden Ansprüche ,
**dadurch gekennzeichnet, dass** der obere Lagerring (12a) und der untere Lagerring (12b) relativ zueinander um eine vertikal verlaufende Achse drehbar sind.

5. Sitz- und Stützmöbel nach einem der vorhergehenden Ansprüche,
**dadurch gekennzeichnet, dass** das zweite Übertragungselement (12) axial in Richtung (L) parallel zu einer Längserstreckung der höhenverstellbaren Säule (2) verlagerbar ist

6. Sitz- und Stützmöbel nach einem der vorhergehenden Ansprüche ,
**dadurch gekennzeichnet, dass** die Übertragungsvorrichtung (8) ein drittes Übertragungselement (15) umfasst, wobei das dritte Übertragungselement (15) mit zumindest einem von erstem Übertragungselement (9) und zweitem Übertragungselement (12) gekoppelt ist.

7. Sitz- und Stützmöbel nach Anspruch 6, **dadurch gekennzeichnet, dass** das dritte Übertragungselement (15) als Bowdenzug mit zumindest einem Zugmittel (16) ausgebildet ist, wobei das Zugmittel (16) des Bowdenzugs (15) abschnittsweise von einer Führungshülle (17) umgeben ist und die Führungshülle (17) zumindest abschnittsweise spiralförmig ausgebildet ist.

8. Sitz- und Stützmöbel nach einem der vorhergehenden Ansprüche,
**dadurch gekennzeichnet, dass** der Verriegelungsmechanismus (7) ein erstes Rastelement (18) umfasst, wobei das erste Rastelement (18) axial in Richtung (L) parallel zu einer Längserstreckung der höhenverstellbaren Säule (2) verlagerbar ist.

9. Sitz- und Stützmöbel nach Anspruch 8, **dadurch gekennzeichnet, dass** das erste Rastelement (18) mit der Übertragungsvorrichtung (8) gekoppelt ist.

10. Sitz- und Stützmöbel nach Anspruch 8 oder 9, **dadurch gekennzeichnet, dass** ein Übertragungselement (9; 12; 15) der Übertragungsvorrichtung (8) mit dem ersten Rastelement (18) verbunden ist.

11. Sitz- und Stützmöbel nach einem der Ansprüche 8 bis 10, **dadurch gekennzeichnet, dass** das erste Rastelement (18) als Rastring ausgebildet ist.

12. Sitz- und Stützmöbel nach Anspruch 11, **dadurch gekennzeichnet, dass** der Verriegelungsmechanismus (7) ein zweites Rastelement (21) umfasst, wobei das zweite Rastelement (21) als Rastfeder ausgebildet ist, wobei das zweite Rastelement (21) lösbar mit der höhenverstellbaren Säule (2) verbindbar ist.

13. Sitz- und Stützmöbel nach Anspruch 12, **dadurch gekennzeichnet, dass** das zweite Rastelement (21) mit einem Stoppelement (6a) des Stoppmechanismus (6) verbunden ist, wobei das erste Rastelement (18) in einem verriegelten Zustand des Verriegelungsmechanismus (7) das zweite Rastelement (21) in eine Raststellung gegenüber der höhenverstellbaren Säule vorspannt.

14. Stoppmechanismus zur Verwendung in einem Sitzmöbel, insbesondere einem Sitz- und Stützmöbel nach einem der Ansprüche 1 bis 13, umfassend
ein Gehäuse (20),
ein relativ zu dem Gehäuse (20) verlagerbares Stoppelement (6a),
ein mit dem Stoppelement (6a) gekoppelter Verriegelungsmechanismus (7) zur lösbaren Verriegelung der Verlagerung des Stoppelementes (6a), und
ein mit dem Verriegelungsmechanismus (7) gekoppelte Übertragungsvorrichtung (8),
wobei die Übertragungsvorrichtung (8) einen Bowdenzug (15) mit zumindest einem Zugmittel (16) umfasst,
wobei das Zugmittel (16) des Bowdenzugs (15) abschnittsweise von einer Führungshülle (17) umgeben ist, welche in einer axialen Richtung des Bowdenzuges expandierbar ausgebildet ist,
**dadurch gekennzeichnet,**
**dass** die Führungshülle (17) und das Zugmittel (16) zumindest abschnittsweise spiralförmig ausgebildet sind.

15. Stoppmechanismus zur Verwendung in einem Sitzmöbel mit einer höhenverstellbaren Säule (2), nach einem der Ansprüche 1 bis 13, umfassend
ein Gehäuse (20),
ein relativ zu dem Gehäuse (20) verlagerbares Stoppelement (6a),
ein mit dem Stoppelement (6a) gekoppelter Verriegelungsmechanismus (7) zur lösbaren Verriegelung der Verlagerung des Stoppelementes (6a), und
ein mit dem Verriegelungsmechanismus (7) gekoppelte Übertragungsvorrichtung (8),
wobei die Übertragungsvorrichtung (8) ein als Tellerlager mit einem oberen Lagerring (12a) und einem unteren Lagerring (12b) ausgebildetes Übertragungselement (12) umfasst,
**dadurch gekennzeichnet,**
**dass** der Verriegelungsmechanismus (7) ein erstes Rastelement (18) umfasst,
**dass** das erste Rastelement (18) mit der Übertragungsvorrichtung (8) gekoppelt ist, und
**dass** das erste Rastelement (18) axial in Richtung (L) parallel zu einer Längserstreckung der höhenverstellbaren Säule (2) verlagerbar ist.

## Claims

1. Seating and support furniture, comprising
a height-adjustable column (2),
a seating and support corpus (3) which is pivotably mounted about at least one horizontal axis (4) between a first end position (5a) and a second end position (5b) on a first end (2a) of the height-adjustable column (2),
a stopping mechanism (6) situated at a second end (2b) of the height-adjustable column (2), and
a locking mechanism (7) for releasably locking the stopping mechanism (6),
wherein a transfer device (8) is used to release the locking of the stopping mechanism (6) by the locking mechanism (6) via the pivoting of the seating and support corpus (3) between the first end position (5a) and the second end position (5b),
wherein the transfer device (8) comprises a first transfer element (9), which is displaceable by the pivoting of the seating and support corpus (3) between the first end position and the second end position,
**characterized in**
**that** the transfer device (8) comprises a second transfer element (12), that the first transfer element (8) is coupled to the second transfer element (12), and
**that** the second transfer element (12) is configured as a plate bearing having an upper bearing ring (12a) and a lower bearing ring (12b).

2. Seating and support furniture according to claim 1, **characterized in that** the first transfer element (9) is configured as a traction rod.

3. Seating and support furniture according to claim 1 or 2, **characterized in that** a first end (10a) of a spring (10) is connected to the height-adjustable column (2) and a second end (10b) of the spring (10) is connected to the seating and support corpus (3), and that the spring (10) supports a pivoting of the seating and support corpus (3) about the horizontal axis (4), wherein the first transfer element (9) is attached to the spring (10) with a first end (9a).

4. Seating and support furniture according to any of the preceding claims, **characterized in that** the upper bearing ring (12a) and the lower bearing ring (12b) are rotatable relative to one another about a vertically extending axis.

5. Seating and support furniture according to any of the preceding claims, **characterized in that** the second transfer element (12) is axially displaceable in the direction (L) parallel to a longitudinal extension of the height-adjustable column (2).

6. Seating and support furniture according to any of the preceding claims, **characterized in that** the transfer device (8) comprises a third transfer element (15), wherein the third transfer element (15) is coupled to at least one of the first transfer element (9) and the second transfer element (12).

7. Seating and support furniture according to claim 6, **characterized in that** the third transfer element (15) is configured as a Bowden cable with at least one traction means (16), wherein the traction means (16) of the Bowden cable (15) is surrounded in portions by a guide sleeve (17) and the guide sleeve (17) has, at least in portions, a spiral-shaped design.

8. Seating and support furniture according to any of the preceding claims, **characterized in that** the locking mechanism (7) comprises a first latching element (18), wherein the first latching element (18) is axially displaceable in a direction (L) parallel to a longitudinal extension of the height-adjustable column (2).

9. Seating and support furniture according to claim 8, **characterized in that** the first latching element (18) is coupled to the transfer device (8).

10. Seating and support furniture according to claim 8 or 9, **characterized in that** a transfer element (9; 12; 15) of the transfer device (8) is connected to the first latching element (18).

11. Seating and support furniture according to any of claims 8 to 10, **characterized in that** the first latching element (18) is configured as a latching ring.

12. Seating and support furniture according to claim 11, **characterized in that** the locking mechanism (7) comprises a second latching element (21), wherein the second latching element (21) is configured as a latching spring, wherein the second latching element (21) is releasably connectable to the height-adjustable column (2).

13. Seating and support furniture according to claim 12, **characterized in that** the second latching element (21) is connected to a stopping element (6a) of the stopping mechanism (6), wherein the first latching element (18) preloads the second latching element (21) into a locking position with respect to the height-adjustable column in a latching position of the locking mechanism (7).

14. Stopping mechanism for use in a piece of seating furniture, in particular a seating and support furniture according to any of claims 1 to 13, comprising
a housing (20),
a stopping element (6a) which is displaceable relative to the housing (20),
a locking mechanism (7) coupled to the stopping element (6a) for releasably locking the displacement of the stopping element (6a), and
a transfer device (8) coupled to the locking mechanism (7),
wherein the transfer device (8) comprises a Bowden cable (15) having at least one traction element (16),
wherein the traction element (16) of the Bowden cable (15) is surrounded in portions by a guide sleeve (17), which is designed to be expandable in an axial direction of the Bowden cable (15),
**characterized in**
**that** the guide sleeve (17) and the traction element (16) have, at least in portions, a spiral-shaped design.

15. Stopping mechanism for use in a seating furniture having a height-adjustable column (2) according to any of claims 1 to 13, comprising
a housing (20),
a stopping element (6a) which is displaceable relative to the housing (20),
a locking mechanism (7) coupled to the stopping element (6a) for releasably locking the displacement of the stopping element (6a), and
a transfer device (8) coupled to the locking mechanism (7),
wherein the transfer device (8) comprises a transfer element (12) configured as a plate bearing having an upper bearing ring (12a) and a lower bearing ring (12b),
**characterized in**
**that** the locking mechanism (7) comprises a first latching element (18), that the first latching element (18) is coupled to the transfer device (8), and
**that** the first latching element (18) is axially displaceable in a direction (L) parallel to a longitudinal extension of the height-adjustable column (2).

## Revendications

1. Meuble d'assise et de support, comprenant
une colonne (2) réglable en hauteur,
un corps d'assise et de support (3) qui est disposé à une première extrémité (2a) de la colonne (2) réglable en hauteur de manière à pouvoir pivoter sur au moins un axe horizontal (4) entre une première position d'extrémité (5a) et une deuxième position d'extrémité (5b),
un mécanisme d'arrêt (6) disposé à une deuxième extrémité (2b) de la colonne (2) réglable en hauteur, et
un mécanisme de verrouillage (7) destiné à verrouiller de manière libérable le mécanisme d'arrêt (6),
le verrouillage du mécanisme d'arrêt (6) étant libéré par le mécanisme de verrouillage (7) au moyen d'un dispositif de transmission (8) par pivotement du corps d'assise et de support (3) entre la première position d'extrémité (5a) et la deuxième position d'extrémité (5b),
le dispositif de transmission (8) comprenant un premier élément de transmission (9) qui est déplaçable par pivotement du corps d'assise et de support (3) entre la première position d'extrémité (5a) et la deuxième position d'extrémité (5b),
**caractérisé en ce**
**que** le dispositif de transmission (8) comprend un deuxième élément de transmission (12),
**que** le premier élément de transmission (9) est accouplé au deuxième élément de transmission (12), et
**que** le deuxième élément de transmission (12) est conçu comme un palier à disque pourvu d'une bague de palier supérieure (12a) et d'une bague de palier inférieure (12b).

2. Meuble d'assise et de support selon la revendication 1, **caractérisé en ce que** le premier élément de transmission (9) est conçu comme une barre de traction.

3. Meuble d'assise et de support selon la revendication 1 ou 2, **caractérisé en ce qu'**une première extrémité (10a) d'un ressort (10) est raccordée à la colonne (2) réglable en hauteur et une deuxième extrémité (10b) du ressort (10) est raccordée au corps d'assise et de support (3), et **en ce que** le ressort (10) vient en appui du pivotement du corps d'assise et de support (3) sur l'axe horizontal (4), le premier élément de transmission (9) étant fixé par une première extrémité (9a) au ressort (10).

4. Meuble d'assise et de support selon l'une des revendications précédentes, **caractérisé en ce que** la bague de palier supérieure (12a) et la bague de palier inférieure (12b) peuvent tourner l'une par rapport à l'autre sur un axe vertical.

5. Meuble d'assise et de support selon l'une des revendications précédentes, **caractérisé en ce que** le deuxième élément de transmission (12) est déplaçable axialement dans une direction (L) parallèle à une extension longitudinale de la colonne (2) réglable en hauteur.

6. Meuble d'assise et de support selon l'une des revendications précédentes, **caractérisé en ce que** le dispositif de transmission (8) comprend un troisième élément de transmission (15), le troisième élément de transmission (15) étant accouplé à l'un au moins parmi le premier élément de transmission (9) et le deuxième élément de transmission (12).

7. Meuble d'assise et de support selon la revendication 6, **caractérisé en ce que** le troisième élément de transmission (15) est conçu comme un câble Bowden pourvu d'au moins un moyen de traction (16), le moyen de traction (16) du câble Bowden (15) étant entouré par portions par un manchon de guidage (17) et le manchon de guidage (17) étant conçu au moins par portions en forme de spirale.

8. Meuble d'assise et de support selon l'une des revendications précédentes, **caractérisé en ce que** le mécanisme de verrouillage (7) comprend un premier élément d'encliquetage (18), le premier élément d'encliquetage (18) étant déplaçable axialement dans une direction (L) parallèle à une extension longitudinale de la colonne (2) réglable en hauteur.

9. Meuble d'assise et de support selon la revendication 8, **caractérisé en ce que** le premier élément d'encliquetage (18) est accouplé au dispositif de transmission (8).

10. Meuble d'assise et de support selon la revendication 8 ou 9, **caractérisé en ce qu'**un élément de transmission (9; 12; 15) du dispositif de transmission (8) est relié au premier élément d'encliquetage (18).

11. Meuble d'assise et de support selon l'une des revendications 8 à 10, **caractérisé en ce que** le premier élément d'encliquetage (18) est conçu comme un anneau d'encliquetage.

12. Meuble d'assise et de support selon la revendication 11, **caractérisé en ce que** le mécanisme de verrouillage (7) comprend un deuxième élément d'encliquetage (21), le deuxième élément d'encliquetage (21) étant conçu comme un ressort d'encliquetage, le deuxième élément d'encliquetage (21) pouvant être relié de manière libérable à la colonne (2) réglable en hauteur.

13. Meuble d'assise et de support selon la revendication 12, **caractérisé en ce que** le deuxième élément d'encliquetage (21) est relié à un élément d'arrêt (6a) du mécanisme d'arrêt (6), le premier élément d'encliquetage (18) exerçant, lorsque le mécanisme de verrouillage (7) est verrouillé, une précontrainte sur le deuxième élément d'encliquetage (21) pour l'amener dans une position d'encliquetage par rapport à la colonne réglable en hauteur.

14. Mécanisme d'arrêt destiné à être utilisé dans un meuble d'assise, notamment un meuble d'assise et de support selon l'une des revendications 1 à 13, ledit mécanisme d'arrêt comprenant
un boîtier (20),
un élément d'arrêt (6a) déplaçable par rapport au boîtier (20),
un mécanisme de verrouillage (7) accouplé à l'élément d'arrêt (6a) et destiné à verrouiller de manière libérable le déplacement de l'élément d'arrêt (6a), et
un dispositif de transmission (8) accouplé au mécanisme de verrouillage (7),
le dispositif de transmission (8) comprenant un câble Bowden (15) pourvu d'au moins un moyen de traction (16),
le moyen de traction (16) du câble Bowden (15) étant entouré par portions par un manchon de guidage (17) qui est conçu pour être extensible dans une direction axiale du câble Bowden, **caractérisé en ce**
**que** le manchon de guidage (17) et le moyen de traction (16) sont conçus au moins par portions en forme de spirale.

15. Mécanisme d'arrêt destiné à être utilisé dans un meuble d'assise comprenant une colonne (2) réglable en hauteur, selon l'une des revendications 1 à 13, ledit mécanisme d'arrêt comprenant
un boîtier (20),
un élément d'arrêt (6a) déplaçable par rapport au boîtier (20),
un mécanisme de verrouillage (7) accouplé à l'élément d'arrêt (6a) et destiné à verrouiller de manière libérable le déplacement de l'élément d'arrêt (6a), et
un dispositif de transmission (8) accouplé au mécanisme de verrouillage (7),
le dispositif de transmission (8) comprenant un élément de transmission (12) conçu comme un palier à disque pourvu d'une bague de palier supérieure (12a) et d'une bague de palier inférieure (12b),
**caractérisé en ce**
**que** le mécanisme de verrouillage (7) comprend un premier élément d'encliquetage (18),
**que** le premier élément d'encliquetage (18) est accouplé au dispositif de transmission (8), et
**que** le premier élément d'encliquetage (18) peut être déplacé axialement dans une direction (L) parallèle à une extension longitudinale de la colonne (2) réglable en hauteur.
